# EUROPÄISCHE PATENTANMELDUNG

(11) **EP 0 945 657 A2**
(43) Veröffentlichungstag der Anmeldung: **29.09.1999**
(21) Anmeldenummer: 99104515.4
(22) Anmeldetag: 06.03.1999
(51) Int. Cl.: F16K 27/00, F16K 27/04

(54) **Verbindungszwischenteil**

(30) Priorität: 26.03.1998 DE 19813401
(71) Anmelder: WILO GmbH, D-44263 Dortmund (DE)
(72) Erfinder: Julien, Henri, 78310 Maurepas (FR); Strelow, Günter, 44801 Bochum (DE)
(74) Vertreter: COHAUSZ HANNIG DAWIDOWICZ & PARTNER

(57) **Zusammenfassung**

Die Erfindung betrifft ein Verbindungszwischenteil (4) zwischen einem 3-Wege-Ventil (2) und einem Verbraucher, wobei das Verbindungszwischenteil (4) mit einer ersten planen Seitenfläche (5) an der Seitenfläche (3) des Ventils und mit einer dazu parallelen zweiten Seitenfläche (6) an der Seitenfläche eines Verbrauchers befestigt ist. Die Seitenflächen (5,6) weisen Anschlußdurchlässe (7,8) zum Ventil und zum Verbraucher auf. Das Verbindungszwischenteil (4) weist in der zwischen den Seitenflächen (5,6) befindlichen Außenwand Anschlußöffnungen (10,11) auf, die als Ein- und/oder Auslässe zum Anschluß an den Verbraucher und an eine Pumpe dienen.

## Beschreibung

Die Erfindung betrifft ein Verbindungszwischenteil zwischen einem 3-Wege-Ventil und einem Verbraucher, wobei das Verbindungszwischenteil mit einer ersten planen Seitenfläche an der Seitenfläche des Ventils und mit einer dazu parallelen zweiten Seitenfläche an der Seitenflache eines Verbrauchers befestigt ist, wobei die Seitenflächen Anschlußdurchlässe zum Ventil und zum Verbraucher aufweisen.

Es ist bekannt, Drei- oder Vier-Wegeventile über Leitungen innerhalb von Anlagen an Vorrichtungen anzuschließen wie es z. B. bei Heizungsanlagen der Fall ist. Die Montage des Ventils einschließlich des Antriebs zwischen den Leitungen erfordert einen erheblichen Arbeitsaufwand und verhältnismäßig viel Platz.

Zudem ist es bekannt, Mehrwegventile in einem flachen Gehäuse unterzubringen, das in einer ersten Stirnseite Öffnungen für den Anschluß der Hauptleitungen aufweist und in seiner anderen parallelen Stirnseite Öffnungen zum Anschluß einer Kreiselpumpe mit stirnseitigem Einlaß und Auslaß hat. Die Verstellmechanik für die Schließteile ist innerhalb des Gehäuses untergebracht. Nachteilig an einem derartigen Mehrwegeventil ist, daß die Ventilmechanik von aufwendiger Konstruktion ist, da im Gehäuse nur geringer Bauraum zur Verfügung steht.

Aufgabe der Erfindung ist es, ein Ventil der eingangs genannten Art so zu verbessern, daß bei einfacher Konstruktion und Fertigung eine leichte Montage und eine hohe Flexibilität ermöglicht wird.

Auch ist es Aufgabe der Erfindung, ein Verbindungszwischenteil zu schaffen, das ohne hohen technischen Aufwand an den jeweiligen Bedarf angepaßte Öffnungen und Durchlässe besitzt, ohne die Öffnungen bzw. Durchlässe nach der Herstellung des Verbindungszwischenteils öffnen oder schließen zu müssen.

Diese Aufgaben werden erfindungsgemäß dadurch gelöst, daß das Verbindungszwischenteil in der zwischen den Seitenflächen befindlichen Außenwand Anschlußöffnungen aufweist, die als Ein- und/oder Auslässe zum Anschluß an den Verbraucher und an eine Pumpe dienen.

Eine solche Konstruktion ermöglicht es, wahlweise das Verbindungszwischenteil entweder mit der dem Ventil abgewandten Seitenfläche an einen Verbraucher wie zum Beispiel einem Heizkessel durch Anlage dieser Seitenfläche an der Verbraucherseitenfläche anzuschließen oder aber zum Anschluß an den Verbraucher die Öffnungen in der Außenwand des Verbindungszwischenteiles zu nutzen, die zwischen der Seitenfläche und dem Ventil liegt. Damit ist bei einfachster Konstruktion eine hohe Flexibilität möglich.

Ein besonders einfacher und sicherer Anschluß der Pumpe wird dann erreicht, wenn die Anschlußöffnung für die Pumpe eine an dem Verbindungszwischenteil-Gehäuse drehbar gelagerte unverlierbare Mutter aufweist zur Befestigung am Pumpenstutzen. Ferner wird vorgeschlagen, daß durch das Ventil die Öffnungen und/oder Durchlässe steuerbar sind.

Besonders vorteilhaft ist es, wenn die Öffnungen und/oder Durchlässe wahlweise dauerhaft verschlossen sind. Hierbei kann der Verschluß der Öffnungen und/oder Durchlässe angeformtes Material des Verbindungszwischenteil-Gehäuses sein. Auch ist von Vorteil, wenn das Verbindungszwischenteil-Gehäuse aus Kunststoff oder Messing ist.

Ein besonders vorteilhaftes Verfahren und/oder ein besonders vorteilhaftes nutzbares Spritzwerkzeug zum Herstellen eines Verbindungszwischenteiles wird dann geschaffen, wenn im Spritzwerkzeug zur Herstellung des Verbindungszwischenteiles wahlweise die Öffnungen und/oder Durchlässe durch Spritzmaterial verschließbar sind.

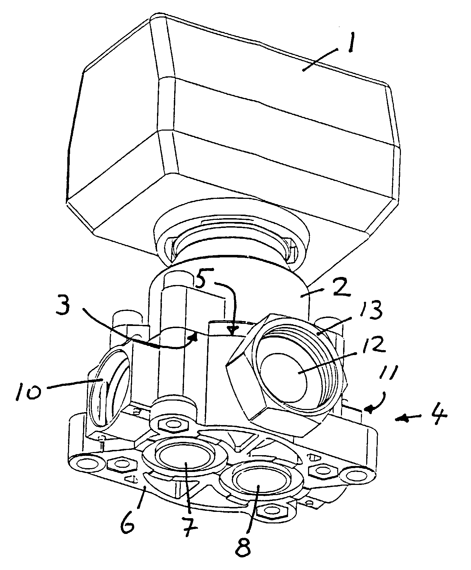

Ein Ausführungsbeispiel der Erfindung ist in der Zeichnung perspektivisch dargestellt und wird im folgenden näher beschrieben.

Ein durch ein Motor 1 angetriebenes Drei-Wege-Ventil 2 weist auf der dem Motor abgewandten Seite eine flache Seitenwand 3 auf, an der ein Verbindungszwischenteil (Adapter) 4 mit einer ersten flachen Seitenfläche 5 befestigt ist. Hierbei weisen die Seitenwand 3 und die Seitenfläche 5 miteinander fluchtende Öffnungen bzw. Durchlässe auf, so daß über das Drei-Wege-Ventil 2 die Durchflüsse durch die Kanäle im Inneren des Verbindungszwischenteiles 4 gesteuert werden.

Auf der dem Drei-Wege-Ventil 2 abgewandten Seite besitzt das Verbindungszwischenteil 4 eine zweite flache Seitenfläche 6, die zur Seitenfläche 5 parallel ist und in der zwei Anschlußdurchlässe 7, 8 münden. Mit dieser Seitenfläche 6 ist das Verbindungszwischenteil 4 an einem nicht dargestellten Verbraucher, wie zum Beispiel an einem Heizkessel befestigbar, wobei der Verbraucher eine flache Seitenwand mit Durchlässen aufweist, die mit den Durchlässen 7, 8 nach der Befestigung fluchten.

Zwischen den beiden Seitenflächen 5, 6 bildet das Verbindungszwischenteil 4 eine Außenwand 9, die rundum verläuft und in der zumindest zwei Anschlußöffnungen 10, 11, insbesondere diametral gegenüber liegend münden. Diese Anschlußöffnungen 10, 11 können zusätzlich oder alternativ zu den Anschlußdurchlässen 7, 8 verwendet werden, um einen Verbraucher anzuschließen.

Zwischen den beiden Öffnungen 10, 11 liegt eine weitere Anschlußöffnung 12, an der der Saug- oder Druckstutzen einer Pumpe anschließbar ist. Hierzu ist an der Öffnung 12 eine Mutter 13 drehbar befestigt, wobei diese Befestigung eine unverlierbare Lagerung darstellt, so daß die Mutter 13 stets von dem Verbindungszwischenteil gehalten wird.

Das Gehäuse des Verbindungszwischenteiles 4 besteht vorzugsweise aus Kunststoff oder Messing, wobei auch die inneren Teile, insbesondere Kanäle des Verbindungszwischenteiles 4 aus Kunststoff oder Messing sind. Je nach Anwendungsfall sind stets nur die Öffnungen oder Durchlässe des Verbindungszwischenteils offen, die benötigt werden. Die nicht verwendeten Öffnungen oder Durchlässe sind geschlossen. Hierbei ist es besonders vorteilhaft, wenn bereits im Spritzwerkzeug zur Herstellung des Verbindungszwischenteiles 4 dafür gesorgt wird, daß die jeweilig nicht benötigten Öffnungen und Durchlässe durch den Kunststoff bzw. das Messing geschlossen sind.

## Patentansprüche

1. Verbindungszwischenteil (4) zwischen einem 3-Wege-Ventil (2) und einem Verbraucher, wobei das Verbindungszwischenteil (4) mit einer ersten planen Seitenfläche (5) an der Seitenfläche (3) des Ventils und mit einer dazu parallelen zweiten Seitenfläche (6) an der Seitenfläche eines Verbrauchers befestigt ist, wobei die Seitenflächen Anschlußdurchlässe zum Ventil (2) und zum Verbraucher aufweisen, **dadurch gekennzeichnet**, daß das Verbindungszwischenteil (4) in der zwischen den Seitenflächen (5, 6) befindlichen Außenwand Anschlußöffnungen (10, 11, 12) aufweist, die als Einund/oder Auslässe zum Anschluß an den Verbraucher und an eine Pumpe dienen.

2. Verbindungszwischenteil nach Anspruch 1, **dadurch gekennzeichnet**, daß die Anschlußöffnung (12) für die Pumpe eine an dem Verbindungszwischenteil-Gehäuse drehbar gelagerte unverlierbare Mutter (13) aufweist zur Befestigung am Pumpenstutzen.

3. Verbindungszwischenteil nach Anspruch 1 oder 2, **dadurch gekennzeichnet**, daß durch das Ventil (2) die Öffnungen und/oder Durchlässe (7, 8, 10 - 12) steuerbar sind.

4. Verbindungszwischenteil nach einem der vorherigen Ansprüche, **dadurch gekennzeichnet**, daß die Öffnungen und/oder Durchlässe (7, 8, 10 - 12) wahlweise dauerhaft verschlossen sind.

5. Verbindungszwischenteil nach Anspruch 4, **dadurch gekennzeichnet**, daß der Verschluß der Öffnungen und/oder Durchlässe (7, 8, 10 - 12) angeformtes Material des Verbindungszwischenteil-Gehäuses ist.

6. Verbindungszwischenteil nach einem der vorherigen Ansprüche, **dadurch gekennzeichnet**, daß das Verbindungszwischenteil-Gehäuse aus Kunststoff oder Messing ist.

7. Verfahren und/oder Spritzwerkzeug zum Herstellen eines Verbindungszwischenteiles (4) nach einem der vorherigen Ansprüche, **dadurch gekennzeichnet**, daß im Spritzwerkzeug zur Herstellung des Verbindungszwischenteiles wahlweise die Öffnungen und/oder Durchlässe (7, 8, 10 - 12) durch Spritzmaterial verschließbar sind.
